# FASCICULE DE BREVET EUROPEEN

(11) **EP 3 904 618 B1**
(45) Date de publication et mention de la délivrance du brevet: **13.03.2024**
(21) Numéro de dépôt: 21170859.9
(22) Date de dépôt: 28.04.2021
(51) Int. Cl.: E04B 2/86, E04C 2/34, E04B 1/76

(54) **PREMUR BAS CARBONE**
KOHLENSTOFFARME SCHALWAND
LOW CARBON PREFABRICATED WALL

(30) Priorité: 30.04.2020 FR 2004333
(43) Date de publication de la demande: 03.11.2021
(73) Titulaire: Spurgin Leonhart, 67600 Selestat (FR)
(72) Inventeur: BOLLARD, Pierre, 74410 Saint-Jorioz (FR); LENGES, Marc, 67750 Scherwiller (FR); TORNATORE, Pino, 68000 Colmar (FR)
(74) Mandataire: Cabinet Nuss

(56) Documents cités:
- CN-A- 107 268 846
- DE-A1- 2 215 597
- DE-A1- 4 424 941
- FR-A1- 3 008 116
- FR-A1- 3 021 982

## Description

La présente invention se rapporte au domaine des constructions et éléments de construction bas carbone et plus particulièrement au domaine des éléments structurels préfabriqués bas carbone.

Dans le cadre de la lutte contre le réchauffement climatique, des contraintes règlementaires sont apparues pour réduire les émissions de gaz à effet de serre. Si le secteur des transports est le premier visé par ces mesures, le domaine des bâtiments est également impacté par ces contraintes. En effet, il ne s'agit uniquement d'évaluer la réduction de gaz à effet de serre n'est pas évaluée par le prisme de la seule consommation d'énergie mais par l'empreinte carbone, c'est-à-dire la mesure du volume de dioxyde de carbone (CO₂) émis par combustion d'énergies fossiles, le dioxyde de carbone étant le principal gaz à effet de serre qui contribue au réchauffement climatique.

Dans le domaine de la construction, les performances en matière d'empreinte carbone sont mesurées sur l'ensemble de cycle de vie du bâtiment, depuis sa phase d'édification jusqu'à sa démolition. Cette évaluation est ainsi effectuée à l'appui de différents critères que sont notamment la cohérence de la construction, la limitation des sources d'énergie carbonées pour l'exploitation du bâtiment, voire encore la valorisation du stockage de carbone.

Actuellement, une solution pour limiter les émissions de gaz à effet de serre en phase de construction repose sur l'utilisation de murs à coffrage intégré ou prémurs. Ces prémurs correspondent à des ensembles préfabriqués réalisés par deux panneaux de bétons, voire par la combinaison d'un panneau de béton et d'un panneau de bois tel que proposé par la publication DE-A-44 24941, maintenus de façon sensiblement parallèle entre eux par une armature intermédiaire formant un espacement entre ces deux panneaux. Une fois installés sur site, un béton est coulé dans l'espacement réalisé et maintenu entre les deux panneaux du prémur. Cette solution permet d'opérer une préfabrication sur mesure d'éléments de construction et donc de limiter les pertes de matériaux utilisés tout en s'affranchissant des opérations lourdes et énergivores liées au coffrage de murs de béton.

Pour améliorer la performance carbone de ces prémurs notamment lors de leur installation sur site, des évolutions ont été apportées sur le matériau injecté entre les panneaux. Afin de réduire un peu plus l'empreinte carbone au cours de l'exploitation du bâtiment, le béton classiquement utilisé a été partiellement substitué par des matériaux présentant des propriétés énergétiques plus performantes telles que des polystyrènes. Toutefois, ces différentes solutions rencontrent des limites dans cette recherche de réduction des émissions de gaz à effet de serre.

La présente invention a pour but de pallier cet inconvénient en proposant une solution qui permette de débuter la réduction de l'empreinte carbone dès la conception des éléments structurels préfabriqués tout en conservant ses propriétés de résistances et ses qualités de mise en oeuvre sur les sites de chantier, voire même en complétant la diminution de cette empreinte carbone.

L'invention a ainsi pour objet un prémur défini par la revendication 1.

L'invention porte également sur une construction qui comprend au moins un prémur selon l'invention.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1] est une représentation schématique d'un premier exemple de réalisation d'un prémur selon l'invention intégrant un seul panneau réalisé à partir d'un matériau bio-sourcé.
[Fig. 2] est une représentation schématique d'un second exemple de réalisation d'un prémur selon l'invention intégrant deux panneaux réalisés à partir d'un matériau bio-sourcé.
[Fig. 3] est une représentation schématique d'un troisième exemple de réalisation d'un prémur selon l'invention intégrant un panneau réalisé à partir d'un matériau bio-sourcé associé à un matériau d'isolation.
[Fig. 4] est une représentation schématique d'un quatrième exemple de réalisation d'un prémur selon l'invention intégrant deux panneaux réalisés à partir d'un matériau bio-sourcé et dont l'un d'entre eux est associé à un matériau d'isolation.

L'invention concerne à un prémur comprenant au moins deux panneaux 1, 2 disposés dans des plans respectifs et sensiblement parallèles entre eux, les panneaux 1, 2 étant maintenus écartés par au moins une armature de jonction 3 qui coopère avec au moins une face de chacun des panneaux 1, 2 pour réaliser un volume intérieur 4 du prémur apte et destiné à une opération de coffrage, caractérisé en ce que au moins un des panneaux 1, 2 comprend au moins un matériau bio-sourcé 5, le matériau bio-sourcé 5 intégré dans l'épaisseur du panneau 1, 2 participant à la rigidité structurelle du panneau 1,2.

Le prémur de l'invention propose un ensemble qui forme un mur à coffrage intégré et assure l'incorporation d'au moins un matériau bio-sourcé 5 dans un ou plusieurs de ses panneaux 1, 2 de façon à opérer une réduction de l'empreinte carbone, tout en permettant le coffrage d'un matériau hydraulique, de type béton ou équivalent, coulé dans le volume intérieur 4 entre les deux panneaux 1, 2 du prémur. Le panneau 1, 2 intègre un matériau bio-sourcé 5 dans son épaisseur de sorte que ce matériau bio-sourcé 5 participe à la rigidité structurelle du panneau 1, 2. Cette rigidité structurelle du panneau 1, 2 est également susceptible d'être réalisée par la combinaison du matériau bio-sourcé 5 avec une armature ou une partie d'armature, par exemple des barres d'acier, spécifique de la structure du panneau 1, 2. La rigidité structurelle des panneaux 1, 2 associée à l'armature de jonction 3 du prémur est particulièrement indispensable lors de l'opération de coffrage d'un matériau hydraulique de type béton ou équivalent dans le volume intérieur 4 du prémur. Ainsi, dans le cadre de l'invention, le matériau bio-sourcé n'est pas un simple matériau rapporté ou fixé en complément sur une surface de l'un ou l'autre des panneaux 1, 2 du prémur.

Par ailleurs, bien que les matériaux bio-sourcés 5 présentent une résistance aux efforts inférieure à celle d'un béton classique, par exemple minéral, le prémur de l'invention qui incorpore des matériaux bio-sourcés 5 dans l'épaisseur d'un ou de plusieurs de ses panneaux 1, 2 permet d'opérer un coffrage efficace d'un matériau hydraulique de type béton ou équivalent dans le volume intérieur 4 qui sépare ses deux panneaux 1, 2. Après coffrage, le matériau hydraulique de type béton ou équivalent coulé dans le volume intérieur assurer une reprise d'effort dans la construction qui incorpore le prémur de l'invention. Le prémur de l'invention permet ainsi le coffrage d'un matériau hydraulique dans une construction destiné à une reprise d'effort, sans que cette reprise d'effort de la construction ne soit supportée par les matériaux bio-sourcés 5 des panneaux 1, 2 du prémur de l'invention. Le matériau coulé entre les panneaux 1, 2 du prémur est réalisé à partir d'un mélange de matières inertes de type granulats ou agrégats (graviers, sables, etc.) avec un liant (ciment, bitume, argile) de façon à assurer une agglomération de l'ensemble des éléments du mélange.

Il convient de relever que, dans le cadre de l'invention, l'armature de jonction 3 est susceptible d'être réalisée par toute structure de renfort présentant des propriétés de résistance pour permettre le maintien des panneaux 1, 2 du prémur assemblés en position l'un par rapport à l'autre. Cette propriété de résistance à la traction est notamment indispensable lors de l'opération de remplissage du volume intérieur 4 du prémur. Le matériau déposé dans le volume intérieur 4 exerce alors une pression contre les parois respectives des panneaux orientées vers le volume intérieur 4 du prémur de sorte que chacun des panneaux 1, 2 supporte une force d'écartement par rapport à son homologue. L'armature de jonction 3 qui coopère avec les parois de chacun des panneaux 1, 2 s'oppose, grâce à sa résistance en traction, à un déplacement ou une déformation des panneaux 1, 2 entre eux. Pour répondre à cette condition de résistance, l'armature de jonction 3 est classiquement réalisée en acier. Toutefois, dans le cadre de l'invention, l'armature est susceptible d'être réalisée à partir de tout type de matériaux ou mélanges de matériaux présentant des propriétés de résistance analogue à la traction.

Selon un exemple particulier de réalisation d'un prémur selon l'invention, au moins un matériau bio-sourcé 5 intégré à au moins un des panneaux 1, 2 correspond à du matériau combinant au moins un ciment avec une matière végétale ou un mélange de matières végétales. La matière végétale ou le mélange de matières végétales est susceptible d'être, à titre d'exemple, des copeaux de bois, de la paille, du riz, du chanvre, de la noix de coco, du lin, du colza, du bambou, du bananier et/ou un mélange de ceux-ci de façon à réaliser des bétons bio-sourcés correspondant à savoir respectivement à du béton de bois, du béton de paille, du béton de riz, du béton de chanvre, du béton de noix de coco, du béton de lin, du béton de colza, du béton de bambou, du béton de bananier et/ou un mélange de ceux-ci. Ces différents exemples de bétons sont de types connus. Selon un exemple de production, ces différents bétons sont réalisés par un mélange combinant un liant tel qu'un ciment et/ou de la chaux avec une matière végétale ou un mélange de matières végétales. Une proportion de mélange combinant de l'ordre de 20% de ciment avec 80% de matière végétale est susceptible d'être utilisée, à titre d'exemple non-limitatif, pour la production de tels bétons bio-sourcés.

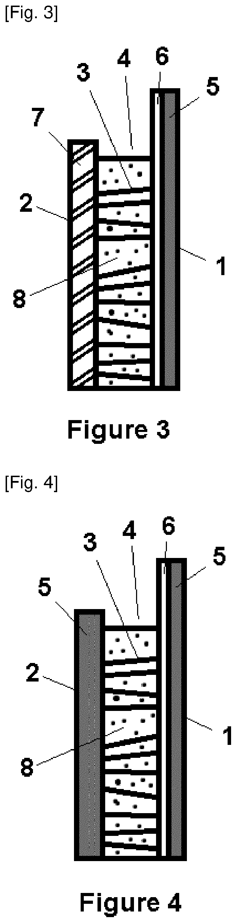

Selon un autre exemple particulier de réalisation d'un prémur selon l'invention susceptible d'être combiné avec l'exemple particulier précédent, au moins un panneau 1, 2 du prémur est réalisé à partir d'au moins, d'une part, une épaisseur de matériau bio-sourcé 5 et, d'autre part, d'une épaisseur d'un matériau d'isolation 6 de sorte que le matériau bio-sourcé 5 est disposé du côté orienté vers une surface extérieure du panneau 1, 2 et que le matériau d'isolation 6 est disposé du côté orienté vers le volume intérieur 4 du prémur. Cet exemple de réalisation correspond à une variante spécifique de l'invention dans laquelle la réduction de l'empreinte carbone liée à la réalisation du prémur est complétée par une réduction de l'empreinte carbone rattachée à l'exploitation du prémur intégré à une construction ou un bâtiment. En effet, le matériau d'isolation 6 intégré à l'épaisseur du panneau 1, 2 du prémur participe à la réduction de la consommation d'énergie et notamment à la combustion d'énergies fossiles au cours de la vie de l'utilisation du bâtiment incorporant un tel prémur selon l'invention. Des exemples de cette alternative de construction sont notamment illustrés par les schémas des figures 3 et 4.

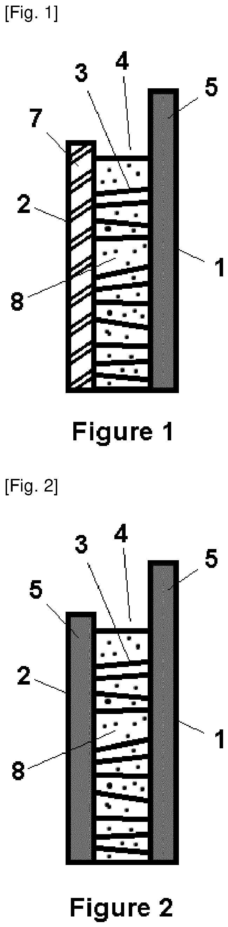

Selon un autre exemple particulier de réalisation d'un prémur selon l'invention susceptible d'être combiné avec l'un ou l'autre des exemples particuliers précédents, le prémur est réalisé par deux panneaux 1, 2 dont chacun est réalisé à partir d'au moins un matériau bio-sourcé 5. Cet exemple de réalisation correspond à une variante spécifique de l'invention dans laquelle la réduction de l'empreinte carbone est optimisée au regard de l'intégration maximale de matériau bio-sourcé 5 dans les éléments structurels du prémur. Des exemples de cette alternative de construction sont notamment illustrés par les schémas des figures 2 et 4.

Selon une alternative à l'exemple particulier précédent, le prémur est réalisé par deux panneaux 1, 2 dont le premier panneau 1 est réalisé à partir d'au moins un matériau bio-sourcé 5 et le second panneau 2 est réalisé à partir d'au moins un matériau de type béton 7. Cet exemple de réalisation correspond à une variante spécifique de l'invention dans laquelle, en raison de contraintes particulières, par exemple règlementaires ou matérielles, il est nécessaire, sinon indispensable, que l'un des panneaux 1, 2 du prémur soit réalisé dans un matériau de type béton 7. Au regard de telles contraintes, la variante spécifique de l'invention permet une optimisation de la réduction de l'empreinte carbone du prémur en intervenant sur le matériau de construction d'un seul des panneaux 1, 2 du prémur. Des exemples de cette alternative de construction sont notamment illustrés par les schémas des figures 1 et 3.

L'invention porte également sur une construction caractérisée en ce que cette construction comprend au moins un prémur selon l'invention. Le prémur selon l'invention est alors intégré à la construction, notamment par coopération avec un matériau hydraulique coulé 8 dans le volume intérieur 4 entre les deux panneaux 1, 2 du prémur. Ce matériau hydraulique 8, classiquement de type béton, est réalisé à partir d'un mélange de matières inertes de type granulats ou agrégats (graviers, sables, etc.) avec un liant (ciment, bitume, argile) de façon à assurer une agglomération de l'ensemble des éléments du mélange. Le coulage du matériau hydraulique 8 dans le volume intérieur 4 du prémur réalise conjointement une prise de l'armature de jonction 3 des deux panneaux 1, 2 du prémur.

Selon un exemple particulier de réalisation d'une construction selon l'invention, au moins une partie du volume intérieur 4 du prémur est remplie par un matériau hydraulique coulé 8 comprenant au moins un matériau bio-sourcé. Selon cette variante particulière, le matériau bio-sourcé est ainsi coulé au niveau d'une partie ou de l'intégralité du volume intérieur 4 du prémur. Selon une spécificité de cette variante particulière de l'invention, le matériau hydraulique bio-sourcé coulé est réalisé sous la forme d'un mélange avec un matériau du type des bétons classiquement utilisés.

Selon un autre exemple particulier de réalisation d'une construction selon l'invention susceptible d'être combiné avec l'exemple particulier précédemment décrit, un prémur selon l'invention est disposé dans la construction de sorte qu'un panneau 1, 2 du prémur comprenant au moins un matériau bio-sourcé 5 est positionné du côté orienté vers l'extérieur de la construction. Cet arrangement particulier du prémur incorporé à une construction permet de profiter avantageusement de propriétés particulières des matériaux bio-sourcés. En effet, les matériaux bio-sourcés et notamment les bétons bio-sourcés, par la combinaison d'un ciment avec des matériaux de type végétal, présentent des propriétés de bonne tenue au feu et résistance aux incendies. Aussi, le positionnement de matériau bio-sourcé 5 d'un prémur selon l'invention avec une orientation vers l'extérieur d'une construction apporte un effet de barrière aux incendies pour protéger les matériaux, tel que les matériaux d'isolation 6, les armatures de jonction 3 et les bétons 7 contre le feu. Par ailleurs, certains bétons à partir matériaux bio-sourcés 5, tels que le béton de chanvre, le béton de bois ou le béton de coco, présentent une rugosité de surface. Une telle rugosité est propriété avantageuse pour la réalisation d'une pose facilité et qualitative d'un enduit, par exemple un enduit hydraulique, en surface d'une paroi. Aussi, la pose d'un enduit sur une surface extérieure sera facilitée pour une construction comprenant un prémur selon l'invention dont un panneau 1 comprenant un matériau bio-sourcé 5 est orienté vers l'extérieur de la construction.

Selon une alternative à l'exemple particulier précédent d'une construction selon l'invention, un prémur selon l'invention est disposé dans la construction de sorte qu'un panneau 1, 2 du prémur comprenant au moins un matériau bio-sourcé 5 est positionné du côté orienté vers un volume intérieur de la construction. Cet arrangement particulier du prémur incorporé à la construction permet également de profiter avantageusement de propriétés particulières des matériaux bio-sourcés. En effet, les matériaux bio-sourcés présente propriétés phoniques intéressantes de sorte que le positionnement de panneau 1, 2 de prémur selon l'invention comprenant un matériau bio-sourcé à l'intérieur d'un bâtiment apporte un amortissement ou une atténuation de la réverbération sonore. De même, une autre propriété des bétons à partir de matériaux bio-sourcés est leur dureté moins importante que des bétons de type classique. Aussi, intégré à l'intérieur d'un bâtiment, les panneaux des prémurs de l'invention seront susceptibles d'être plus aisément travaillés, par exemple pour la réalisation de saignées ou pour des opérations de perçage au niveau de leurs surfaces. Enfin, une autre des propriétés des bétons intégrant des matériaux bio-sourcés est leur capacité de stockage hydrique. Cette propriété permet ainsi une régulation de l'humidité de l'atmosphère intérieure d'un bâtiment tout en opérant conjointement une régulation naturelle de la chaleur par inertie thermique.

Selon un autre exemple particulier de réalisation d'une construction selon l'invention susceptible d'être combiné avec l'un ou l'autre des exemples particuliers précédents, la surface extérieure du prémur est associée à un recouvrement. Ce recouvrement est susceptible d'être un revêtement hydraulique ou plastique ou encore un recouvrement de type crépis, bardage bois ou terre cuite et/ou parement béton, par exemple parement béton intégré. Cet arrangement particulier permet ainsi à la construction intégrant le prémur de l'invention de s'affranchir des contraintes esthétiques de surface susceptibles d'être imposées par la surface extérieure du panneau 1, 2 du prémur.

Bien entendu, l'invention n'est pas limitée aux modes de réalisation décrit et représenté aux dessins annexés. Des modifications restent possibles, notamment du point de vue de la constitution des divers éléments ou par substitution d'équivalents techniques, sans sortir pour autant du domaine de protection de l'invention définie par les revendications.

## Revendications

1. Prémur comprenant au moins deux panneaux (1, 2) disposés dans des plans respectifs et sensiblement parallèles entre eux, les panneaux (1, 2) étant maintenus écartés par au moins une armature de jonction (3) qui coopère avec au moins une face de chacun des panneaux (1, 2) pour réaliser un volume intérieur (4) du prémur apte et destiné à une opération de coffrage, dont au moins un des panneaux (1, 2) comprend au moins un matériau bio-sourcé (5), le matériau bio-sourcé (5) intégré dans l'épaisseur du panneau (1, 2) participant à la rigidité structurelle du panneau (1, 2), **caractérisé en ce que** le matériau bio-sourcé correspond à un matériau combinant au moins un liant tel qu'un ciment et/ou de la chaux avec une matière végétale ou un mélange de matières végétales.

2. Prémur selon la revendication 1, **caractérisé en ce que** au moins un matériau bio-sourcé (5) intégré à au moins un des panneaux (1, 2) correspond à du matériau combinant au moins un ciment avec une matière végétale ou un mélange de matières végétales.

3. Prémur selon la revendication 2, **caractérisé en ce que** au moins un panneau (1, 2) du prémur est réalisé à partir d'au moins, d'une part, une épaisseur de matériau bio-sourcé (5) et, d'autre part, d'une épaisseur d'un matériau d'isolation (6) de sorte que le matériau bio-sourcé (5) est disposé du côté orienté vers une surface extérieure du panneau (1, 2) et que le matériau d'isolation (6) est disposé du côté orienté vers le volume intérieur (4) du prémur.

4. Prémur selon une des revendications précédentes, **caractérisé en ce que** le prémur est réalisé par deux panneaux (1, 2) dont chacun est réalisé à partir d'au moins un matériau bio-sourcé (5).

5. Prémur selon une des revendications 1 à 3, **caractérisé en ce que** le prémur est réalisé par deux panneaux (1, 2) dont le premier panneau (1) est réalisé à partir d'au moins un matériau bio-sourcé (5) et le second panneau (2) est réalisé à partir d'au moins un matériau de type béton (7).

6. Construction **caractérisée en ce que** la construction comprend au moins un prémur selon une des revendications 1 à 5.

7. Construction selon la revendication 6, **caractérisée en ce que** au moins une partie du volume intérieur (4) du prémur est remplie par un matériau hydraulique coulé (8) comprenant au moins un matériau bio-sourcé.

8. Construction selon une des revendications 6 à 7, **caractérisée en ce que** un prémur est disposé dans la construction de sorte qu'un panneau (1, 2) du prémur comprenant au moins un matériau bio-sourcé (5) est positionné du côté orienté vers l'extérieur de la construction.

9. Construction selon une des revendications 6 à 8, **caractérisée en ce que** un prémur est disposé dans la construction de sorte qu'un panneau (1, 2) du prémur comprenant au moins un matériau bio-sourcé (5) est positionné du côté orienté vers un volume intérieur de la construction.

10. Construction selon une des revendications 6 à 9 **caractérisée en ce que** la surface extérieure du prémur est associée à un recouvrement.

## Patentansprüche

1. Doppelwand, die mindestens zwei Platten (1, 2) enthält, die in jeweiligen und im Wesentlichen zueinander parallelen Ebenen angeordnet sind, wobei die Platten (1, 2) von mindestens einer Verbindungsbewehrung (3) in Abstand gehalten werden, die mit mindestens einer Seite jeder der Platten (1, 2) zusammenwirkt, um ein Innenvolumen (4) der Doppelwand zu realisieren, das für einen Verschalungsvorgang geeignet und bestimmt ist, wobei mindestens eine der Platten (1, 2) mindestens ein biobasiertes Material (5) enthält, wobei das in die Dicke der Platte (1, 2) integrierte biobasierte Material (5) an der strukturellen Steifigkeit der Platte (1, 2) beteiligt ist, **dadurch gekennzeichnet, dass** das biobasierte Material einem Material entspricht, das mindestens ein Bindemittel wie einen Zement und/oder Kalk mit einem pflanzlichen Stoff oder einer Mischung von pflanzlichen Stoffen kombiniert.

2. Doppelwand nach Anspruch 1, **dadurch gekennzeichnet, dass** mindestens ein in mindestens eine der Platten (1, 2) integriertes biobasiertes Material (5) einem Material entspricht, das mindestens einen Zement mit einem pflanzlichen Stoff oder einer Mischung pflanzlicher Stoffe kombiniert.

3. Doppelwand nach Anspruch 2, **dadurch gekennzeichnet, dass** mindestens eine Platte (1, 2) der Doppelwand ausgehend von mindestens einerseits einer Dicke von biobasiertem Material (5) und andererseits einer Dicke eines Isoliermaterials (6) realisiert wird, derart, dass das biobasierte Material (5) auf der zu einer Außenfläche der Platte (1, 2) gerichteten Seite angeordnet ist, und dass das Isoliermaterial (6) auf der zum Innenvolumen (4) der Doppelwand ausgerichteten Seite angeordnet ist.

4. Doppelwand nach einem der vorhergehenden Ansprüche, **dadurch gekennzeichnet, dass** die Doppelwand von zwei Platten (1, 2) realisiert wird, von denen jede ausgehend von mindestens einem biobasierten Material (5) realisiert wird.

5. Doppelwand nach einem der Ansprüche 1 bis 3, **dadurch gekennzeichnet, dass** die Doppelwand von zwei Platten (1, 2) realisiert wird, von denen die erste Platte (1) ausgehend von mindestens einem biobasierten Material (5) realisiert wird, und die zweite Platte (2) ausgehend von mindestens einem Material vom Typ Beton (7) realisiert wird.

6. Bauwerk, **dadurch gekennzeichnet, dass** das Bauwerk mindestens eine Doppelwand nach einem der Ansprüche 1 bis 5 enthält.

7. Bauwerk nach Anspruch 6, **dadurch gekennzeichnet, dass** mindestens ein Teil des Innenvolumens (4) der Doppelwand mit einem gegossenen hydraulischen Material (8) gefüllt ist, das mindestens ein biobasiertes Material enthält.

8. Bauwerk nach einem der Ansprüche 6 bis 7, **dadurch gekennzeichnet, dass** eine Doppelwand so im Bauwerk angeordnet ist, dass eine Platte (1, 2) der Doppelwand, die mindestens ein biobasiertes Material (5) enthält, auf der zur Außenseite des Bauwerks ausgerichteten Seite positioniert ist.

9. Bauwerk nach einem der Ansprüche 6 bis 8, **dadurch gekennzeichnet, dass** eine Doppelwand so im Bauwerk angeordnet ist, dass eine Platte (1, 2) der Doppelwand, die mindestens ein biobasiertes Material (5) enthält, auf der zu einem Innenvolumen des Bauwerks ausgerichteten Seite positioniert ist.

10. Bauwerk nach einem der Ansprüche 6 bis 9, **dadurch gekennzeichnet, dass** die Außenfläche der Doppelwand einer Abdeckung zugeordnet ist.

## Claims

1. Prefabricated wall comprising at least two panels (1, 2) disposed in respective planes and substantially parallel to one another, the panels (1, 2) being kept separated by at least one joining reinforcement (3) which cooperates with at least one face of each of the panels (1, 2) to produce an internal volume (4) of the prefabricated wall that is suitable and intended for a formwork operation, of which at least one of the panels (1, 2) comprises at least one bio-sourced material (5), the bio-sourced material (5) incorporated in the thickness of the panel (1, 2) contributing to the structural rigidity of the panel (1, 2), **characterized in that** the bio-sourced material corresponds to a material combining at least one binder such as a cement and/or lime with a plant material or a mixture of plant materials.

2. Prefabricated wall according to Claim 1, **characterized in that** at least one bio-sourced material (5) incorporated in at least one of the panels (1, 2) corresponds to material combining at least one cement with a plant material or a mixture of plant materials.

3. Prefabricated wall according to Claim 2, **characterized in that** at least one panel (1, 2) of the prefabricated wall is produced from at least, on the one hand, a thickness of bio-sourced material (5) and, on the other hand, a thickness of an insulation material (6) such that the bio-sourced material (5) is disposed on the side oriented towards an outer surface of the panel (1, 2) and that the insulation material (6) is disposed on the side oriented towards the internal volume (4) of the prefabricated wall.

4. Prefabricated wall according to one of the preceding claims, **characterized in that** the prefabricated wall is produced by two panels (1, 2), each of which is produced from at least one bio-sourced material (5).

5. Prefabricated wall according to one of Claims 1 to 3, **characterized in that** the prefabricated wall is produced by two panels (1, 2), of which the first panel (1) is produced from at least one bio-sourced material (5) and the second panel (2) is produced from at least one material of concrete type (7).

6. Construction, **characterized in that** the construction comprises at least one prefabricated wall according to one of Claims 1 to 5.

7. Construction according to Claim 6, **characterized in that** at least a part of the internal volume (4) of the prefabricated wall is filled by a poured hydraulic material (8) comprising at least one bio-sourced material.

8. Construction according to either of Claims 6 to 7, **characterized in that** a prefabricated wall is disposed in the construction such that a panel (1, 2) of the prefabricated wall comprising at least one bio-sourced material (5) is positioned on the side oriented towards the outside of the construction.

9. Construction according to one of Claims 6 to 8, **characterized in that** a prefabricated wall is disposed in the construction such that a panel (1, 2) of the prefabricated wall comprising at least one bio-sourced material (5) is positioned on the side oriented towards an internal volume of the construction.

10. Construction according to one of Claims 6 to 9, **characterized in that** the outer surface of the prefabricated wall is associated with a covering.
